Europäisches Patentamt

European Patent Office

Office européen des brevets

(11) Publication number : **0 467 625 A2**

# EUROPEAN PATENT APPLICATION

(21) Application number : **91306399.6**

(22) Date of filing : **15.07.91**

(51) Int. Cl.⁵ : **H05B 6/80**

(30) Priority : **19.07.90 US 555096**

(43) Date of publication of application :
**22.01.92 Bulletin 92/04**

(84) Designated Contracting States :
**CH DE FR GB IT LI**

(71) Applicant : **CEM Corporation**
**3100 Smith Farm Road**
**Matthews North Carolina 28105 (US)**

(72) Inventor : **Revesz, Robert Nick**
**711 Windingbrook Road**
**Monroe, North Carolina 28110 (US)**
Inventor : **Armstrong, Bernard Franklin, Jr.**
**1716-2G Charleston Place Lane**
**Charlotte, North Carolina 28212 (US)**

(74) Representative : **Brown, Kenneth Richard et al**
**R.G.C. Jenkins & Co. 26 Caxton Street**
**London SW1H 0RJ (GB)**

(54) Temperature controlled microwave system for heating contents of sealed moving containers.

(57) A microwave heating system for controllably heating a material, such as a chemical sample being digested by strong acid in a moving sealed container, such as one of polyfluoroethylene and/or polyether imide, includes a source of microwave radiation, such as a magnetron, which radiation is directed into a microwave chamber, a controller for the source of microwave radiation, which can increase or decrease the radiation applied depending on a thermoelectric potential transmitted to it from a thermocouple, and such a thermocouple, the hot junction of which is for insertion into the container and into the material being heated to produce a thermoelectric potential which is indicative of the temperature of the contained material, means for transmitting the thermoelectric potential from the thermocouple to the controller and means for preventing straining of the thermocouple due to movement thereof as the container moves, which strain preventing means facilitates the thermocouple cold junction moving in angular motion corresponding to the motion of the container and the hot junction, and thereby prevents or relieves any straining of the thermocouple that would otherwise be caused by such movements. In other aspects of the invention slip rings are employed, the thermocouple is encased in gold plated shielding, the thermocouple and the shield are of spiral shape, the base of the container and the thermocouple are shielded and a fluoroptic temperature sensor is employed as a temperature check. Also within the invention is a heating process, such as a digestion, in which the invented system is employed.

EP 0 467 625 A2

FIG. 6

This invention relates to microwave heating systems and to microwave heating processes. More specifically, it relates to such systems and processes wherein a thermoelectric potential produced by a thermocouple in a material to be heated is employed to control the application of microwave energy to such material (and to other containers of such material) while it is being moved in a sealed container in a microwave chamber to promote even heating thereof, as when the container is mounted on a turntable. During such heating of material in a moving container strains would normally be generated in the thermocouple due to changing of position thereof with respect to a fixed controller, which could lead to inaccuracies in the controlling thermoelectric potentials generated and could ultimately lead to breakage of the thermocouple. The present invention provides non-twisting means for preventing or relieving such strains and for preventing damage to the thermocouple and errors in the thermoelectric potentials and control signals produced.

Microwave systems, apparatuses and processes have been described for use in laboratory operations and analyses wherein materials to be treated, processed, reacted, dried, ashed, fused or purified have been subjected to microwave heating. Computers, integrated circuits and microchips have been employed to control operations of such systems and have also been used to regulate temperatures to which such materials are heated. In some such analytical systems analyses of the heated materials, as for moisture, fat and ash content, have been performed automatically and results have been reported on a visual display panel. In some instances, in order to provide more even heating of the subject materials, such have been supported by a turntable and have been kept in motion during microwave heating thereof. In other situations pluralities of containers of materials to be heated have been mounted on a turntable and the extent of heating (or pressure development) in one container has been monitored and has been taken to be indicative of the heatings of all the containers, and the heating operations have been conducted accordingly.

Among prior art patents describing various laboratory and analytical microwave apparatuses, systems and processes which may be of some relevance to the present invention there may be mentioned the following U.S. Patents: 4,291,775, which relates to analyses of foods and other natural products for moisture or solvents contents; 4,438,500, which is for an automatic volatility analyzer; 4,457,632, which describes an automatic volatility computer; 4,554,132, directed to an appparatus for determining volatiles, solids and solvent extractables in a sample; 4,565,669, for a microwave ashing apparatus; 4,566,312, for an apparatus for analyzing for fat contents of foods; 4,556,804, for drying apparatuses and processes wherein a commercial analytical microwave system is employed with a turntable to promote even heating of the samples to be dried; 4,672,996, which describes a self-regulating valve for use on a pressurized container for material being digested in a microwave system; and 4,835,354, which also describes employment of a turntable in an automatic microwave heating apparatus for laboratory analyses and processes. U.S. patents, 4,699,591 and 4,699,592 relate to a sliding contacts telephone cord connector for preventing tanglings of such cords. Other patents that were found in a search and which may be of some relevance to the present invention include U.S. patents: 4,228,809, for a temperature controller for a microwave heating system; 4,506,127, for a microwave oven which has its radio frequency oscillator output power automatically controlled by the measured temperature of the object being heated, to prevent overheating; 4,583,356, for a temperature detecting device, a microwave cooking apparatus using such device and a data correcting method relevant thereto; 4,831,227, for microwave ovens and methods for cooking food, in which circulating air temperature is detected by a thermocouple; and 4,870,234, which describes a defrosting detector in a microwave oven cavity, with variations in the detector temperature being employed to control the defrosting process. Also, German OLS 3502095 describes microwave defrosting of a moving bag of blood wherein a thermocouple measures the temperature of the blood and turns off the microwave radiation when the desired temperature is reached.

Although such are not prior art, because they have not yet been published, the following U.S. patent applications are also of interest. S.N. 07/298,554 describes a microwave system for analysing a sample for ash content, wherein a stationary thermocouple is employed to measure the ashing temperature and to control the heating action of a magnetron accordingly; S.N. 07/352,003 is for rapidly sterilizing biological media by microwave heating of such a medium in different containers on a turntable so as to controllably raise the pressure to a desired range; S.N. 07/518,954 is similar to 07/352,003 but includes externally activated magnetic stirring means inside the containners of materials to be heated; and S.N. 07/404,693 discloses ventable rupture diaphragm-protected containers on a turntable in a microwave chamber, which containers and their contents are controllably heated. The various patents, applications and specifications mentioned above are hereby incorporated herein by reference.

Although it is apparent from the above description of the prior art and the mentioned U.S. patent applications that prior to the filing of the present application it was known to utilise turntables in laboratory microwave systems to improve even heatings of materials therein, it was known to employ thermocouples to measure the temperatures to which microwave heated specimens were raised and to control the heating by means of such thermocouples to regulate such temperature, shielding of thermocouples in microwave systems had been suggested, and a telephone connector had been made which prevented twisting and tangling of telephone cords prior to the present invention, insofar as applicants know thermocouples were not inserted into materials in containers supported by a moving turntable and connected to stationary controllers of microwave radiation in such manner as to prevent or relieve any straining of such a thermocouple due to motion thereof, which strain would be expected due to relative movement of the turntable and the thermocouple with respect to the controller.

In accordance with the present invention a microwave heating system for controllably heating a material in a container that is in motion in a microwave chamber comprises a walled microwave chamber, a source of microwave radiation, which radiation is directed into the chamber, a controller for the source of microwave radiation, means for moving in the chamber a microwave transmissive container containing microwave absorptive material to be heated, thermocouple means for insertion into the container to produce a thermoelectric potential which is indicative of the temperature of the contained material being heated by the microwave radiation, means for transmitting the thermoelectric potential produced by the thermocouple to the controller, which controls the operation of the source of microwave radiation in response to such thermoelectric potential and thereby controls the heating of the material in the moving container, and means for preventing straining of the thermocouple that could otherwise be caused by movement thereof as the container moves relative to at least a part of such transmitting means.

In addition to the preferred embodiment of the invention mentioned above, in a broader aspect the invention also relates to relieving strains in other means of transmitting condition-generating or condition-affected signals, including light, pressure, electrical current or potential, etc. signals from a moving container to a microwave radiation controller by means of a conductor, conduit or other connector, which conductor conduit or connector is maintained in strain-free condition, as by preventing or relieving any strains between a portion thereof in the moving container and the fixed controller by coiling or spiralling at least a portion of such signal producing or transmitting means between the container and the controller, by utilizing slip ring or similar means for effecting non-straining communication between such moving and stationary parts, or by otherwise moving such parts angularly in the same direction.

Also within the invention pore processes for controllably heating materials by means of microwave radiation, preferably by employing a heating system of the type described.

The invention will be readily understood by reference to the description in the specification, taken in conjunction with the drawing; in which:

FIG. 1 is a top front perspective view of a prototype embodiment of the invented system, illustrating a plurality of vessels which contain material to be controllably microwave heated, all of which vessels are mounted on a turntable in a microwave chamber, with one of the vessels having a thermocouple therein which is communicated to a controller, and with that vessel and three of the other vessels including fluoroptic temperature probes which are communicated to display means;

FIG. 2 is a top front perspective view of a portion of the invented system, like that of FIG. 1, illustrating the relationship between the various containers of material being heated, the turntable, the thermocouple and the fluoroptic temperature probes;

FIG. 3 is a top perspective view of an essentially cylindrical shielding band for installation on the vessel containing the thermocouple;

FIG. 4 is a view of such thermocouple, in perspective;

FIG. 5 is a partial elevational view of the prototype of the invented system, illustrating drive means for the turntable, the turntable, a vessel containing polar material to be heated by microwave radiation, axial holding means for rotating a held portion of the thermocouple angularly to match the rotation of the vessel and the thermocouple hot junction, grounding means for the thermocouple and slip rings for communicating the moving thermocouple leads with stationary controller leads;

FIG. 6 is a partial elevational view of the invented system, of improved design, illustrating use of a different type of slip ring strain reliever and elimination of the axial holding means;

FIG. 7 is a top front perspective view of the lower of two main portions of the improved slip ring strain reliever of FIG. 6; and

FIG. 8 is a bottom front perspective view of the upper of the two main portions of the improved slip ring strain reliever of FIG's. 6 and 7.

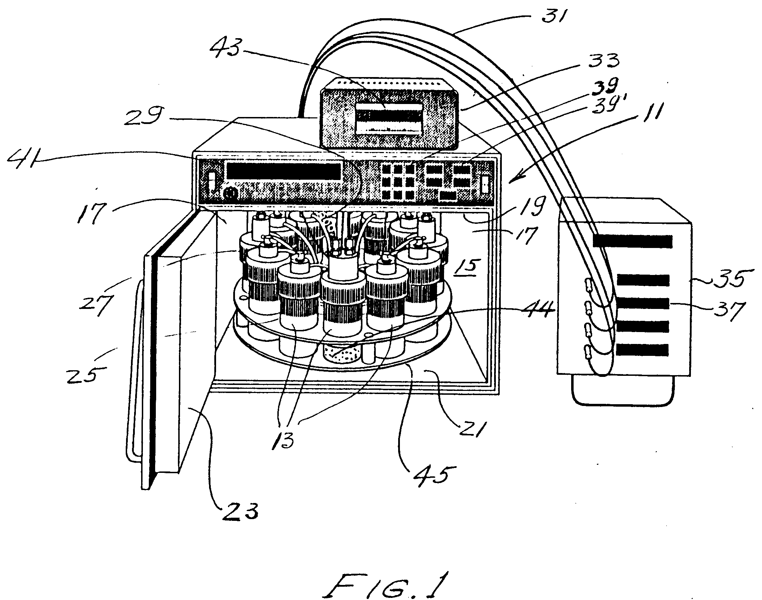

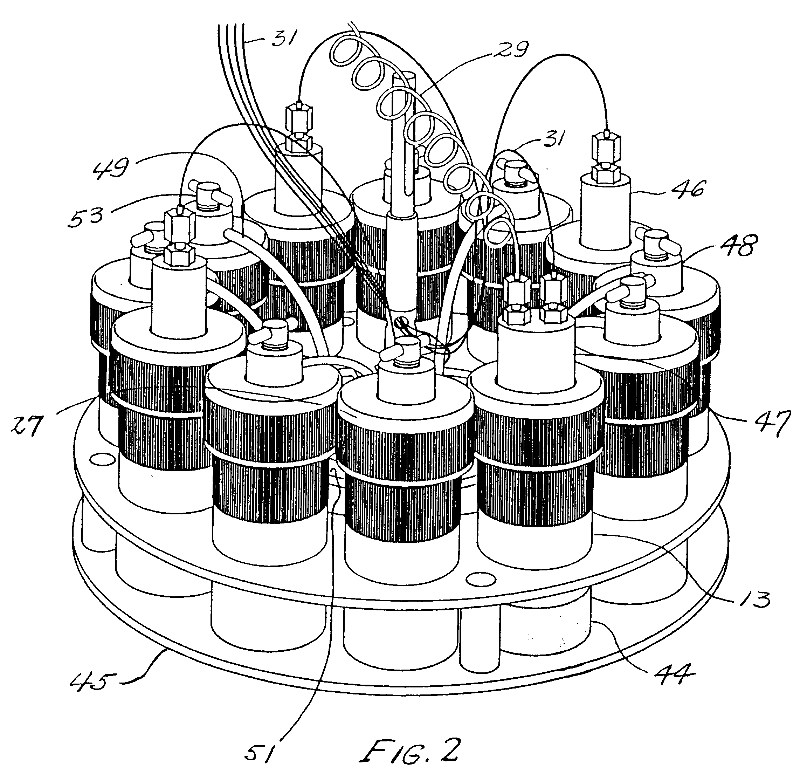

In FIG. 1 there is illustrated microwave heating system 11 for controllably heating polar materials, not shown, in containers 13 which are in motion in the walled microwave chamber 15, which includes side walls 17, top wall 19, bottom 21 and door 23. Containers or vessels 13 include lower portions 25 and screw-on cap portions 27 and one such container includes a thermocouple unit 29 (see FIG'S. 2,4 and 5 for clearer representation thereof). That container and three other containers also include fluoroptic probes 31 (also shown in FIG. 2). Thermocouple 29 is connected to temperature controller 33 which is external to the rest of the microwave heating system but such connection is not illustrated because the connecting wires are hidden by the controller unit. The fluoroptic probes are connected to a sensor/indicator 35, which includes visual displays 37 for displaying the temperatures to which the individual probes are subjected. Prior to beginning of operations the conditions of the microwave heating system can be set by pressing keyboard buttons 39 and 39′ to program the microwave radiation intensity, duration, cyclings, plateaus and bursts, where such may be employed, as well as fan and turntable operations. The conditions of the system may be read on display panel 41. In the embodiment illustrated in FIG. 1 controller 33 is shown as a separate entity, which is wired to the thermocouple and to the circuitry of the microwave heating system, and which may be separately controlled to set or maintain the temperature of a material being microwave heated, and the temperatures set and read may be displayed on visual display 43. Alternatively, such controller may be built into the cabinet for the system, in which case settings thereof and temperature readings may be made and read using the system keyboard buttons 39 and 39′, and display panel 41. In similar manner, the fluoroptic sensor readings may be displayed on the system display panel 41 and the fluoroptic sensor may be built into the basic cabinet for the microwave heating system.

In FIG. 2 turntable 45, which may be capable of being moved in rotational or oscillating rotary motion about a central axis, is shown supporting twelve containers 13, of which one top 27 thereof includes fitting 47 adapted to hold in pressure-tight relationship with it both thermocouple 29 and fluoroptic transmitter 31. Three other such container tops include fittings or adapters 46 for holding fluoroptic sensors 31 but are not suitable for also holding thermocouples. The remaining eight container tops include venting means or adapters 48 for relieving pressure when the desired heating of the contents of such containers is completed, when it is advisable to lower the internal temperature before removing the covers from such containers. As illustrated, venting adapters 48 and venting tubes 49 from such containers are present to facilitate discharge of any gas under pressure, together with any entrained materials, to a common receiver or collection container 51 when sealing screws 53 are backed off. In the illustration such venting means are not shown on the containers that are equipped with thermocouple and/or fluoroptic probes but they can also be utilized with such containers.

In FIG. 2 there is also illustrated a metallic shield, cylinder or band 44 about the bottom portion of the container 13, where the hot junction of thermocouple 29 is located. Such band shields that portion of the container from microwave radiation and it has been found that it decreases the heating of the material in the container in which the thermocouple is present, so that the temperature of such material is more accurately representative of the temperatures of such materials in the other containers that are also subjected to microwave radiation (the lesser heating due to the shielding band compensates for increased heating due to the presence of the thermocouple).

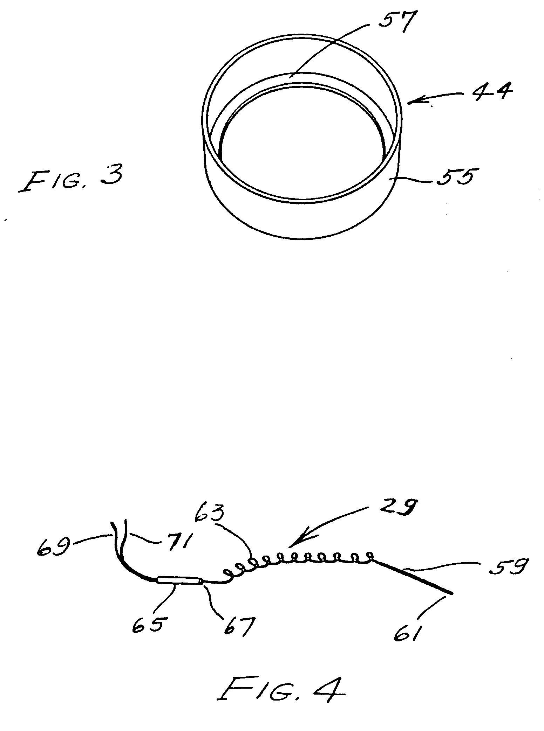

FIG. 3 is a top perspective view of the shielding band 44, which is placed about the bottom of container 13, which bottom also contains the hot junction of thermocouple 29. Band 44 is of metal, such as aluminum, and acts to shield the material around the thermocouple junction from microwave radiation. Band 44 includes a cylindrical wall 55 and a ledge 57, with the internal diameter of the cylindrical wall being essentially the same as the external diameter of container 13. If container 13 is of a shape different from cylindrical shielding member 44 such shielding member may be shaped accordingly. Instead of a shielding band other means may be employed to decrease excess heating of material in the "thermocouple container", such as changes in container design to decrease microwave heating, and the band can be located elsewhere about the container, but at present the band illustrated appears to be most cost effective and easiest to employ.

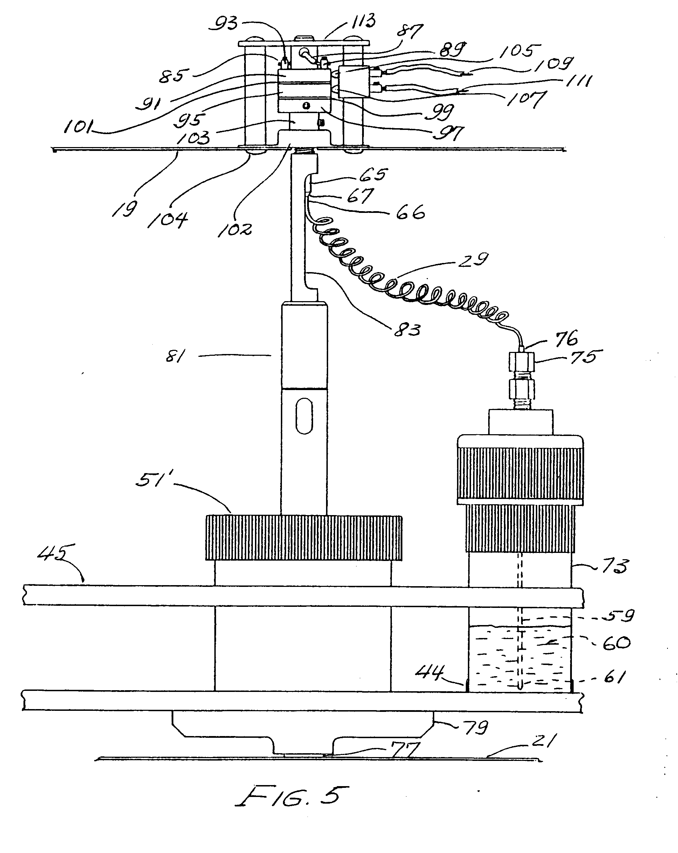

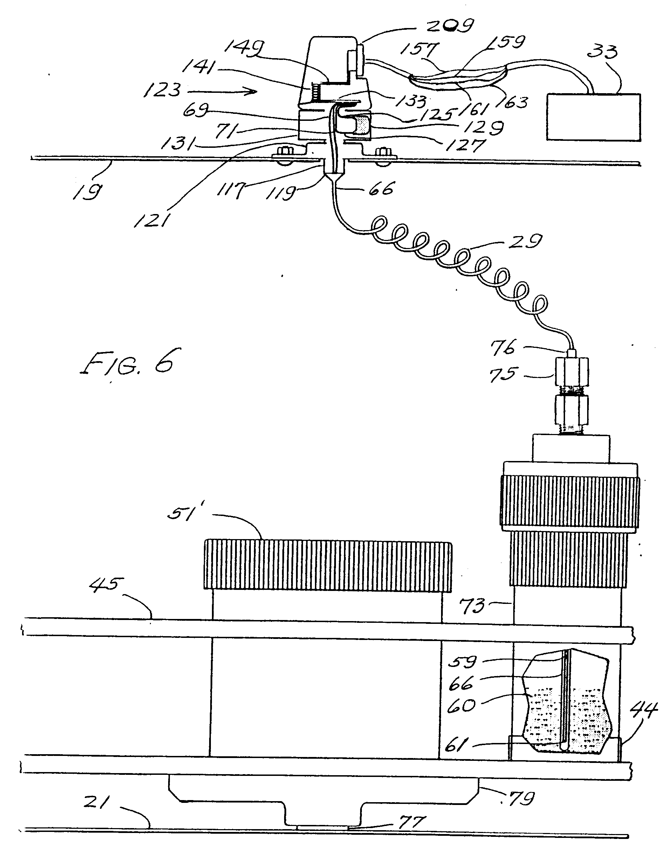

In FIG. 4 there is shown thermocouple 29, which is preferably of chromel-alumel (Type K). Such thermocouple includes a probe end 59, which is substantially straight, and is long enough so that the extreme end 61 thereof can reach to near the bottom of container 13, in which polar liquid 60 is present. Reflective (preferably gold plated) and conductive coils or spiral windings 63 of sheath 66 for the thermocouple wires relieve strains in the thermocouple and such wires,as the thermocouple is moved along with the container 13 and turntable 45, and reduce microwave heating of the metal shielding the thermocouple. Although it does not show as clearly as desirable in the illustration, the actual thermocouple wires, which are insulated from each other except at the spot welded hot junction, which is near the "lower" end of the substantially straight section of the thermocouple, and at the spot welded cold junction, are encased in a protective metal sheath 66, preferably a gold plated steel tube, and in the prototype embodiment of the invention such sheath is welded, soldered or similarly joined to a hollow tube 65 at 67. Tube 65 is for joining to a journal, which turns in a bearing and by means of the joinder of sheath to the tube 65 at 67 the sheath is grounded to the top wall part of the microwave chamber, as will be seen in FIG. 5. The cold junction of the thermocouple may be inside tube 65 or may be otherwise conveniently located in the thermocouple, bearing or slip-ping assembly. Similarly, other normal elements of the thermocouple circuitry, such as a compensating resistor or diode, not shown in FIG. 5, may be included within a larger tube in the sheath, or within the bearing and/or slip ring assembly. Insulated conductive leads 69 and 71 are for connecting to slip rings, as illustrated in FIG. 5, or for otherwise connecting to the controller or to means for transmitting the thermocouple potential difference to the controller. (In FIG. 5 the wire ends are numbered 85 and 87).

In FIG. 5 turntable 45 is shown supporting the single container 73, which is like container 13 except for including fitting 75 (with glass thermowell 76) which is adapted to hold thermostatic assembly 29 in position in the container (fitting 75 is different from fitting 47 of FIG. 2, which is adapted for holding the thermocouple and fluoroptic means). Turntable 45 is rotated or oscillatingly rotated by suitable drive means (not shown) which turns drive shaft 77, which is joined to turntable support 79. In a central portion of the turntable there is located collection container 51' and vertical axial holding means 81 is held to either the turntable or the collection container (depending on the design of the collection container) so that it rotates angularly to the same extent as the turntable and container 73. A portion of the axial holding means 81 is cut away at 83 to allow axial insertion of hollow shaft 65 to which thermocouple 29 is grounded at 67, and through which thermocouple leads pass. Axial holding mechanism 81 is of electrically nonconductive material, such as a synthetic organic polymeric plastic, e.g, polytetrafluoroethylene, polypropylene or high density polyethylene. Because of the joinder of the thermocouple to the axial holding means both ends of the thermocouple rotate with the turntable, so relative motion of such ends with respect to each other is limited (or is prevented), preventing or relieving any straining thereof, due to motion of the turntable. The "hot" and "cold" ends of conductive wires connected to the thermocouple are shown at 85 and 87, after having passed axially through the slip ring assembly at the top of the microwave chamber. Conductive post 89 connects the inner conductor of wire 87 with top slip ring 91 and conductive post 93, which is insulated from slip ring 91, conducts the inner conductor of wire 85 into electrical contact with bottom slip ring 95. The slip rings are insulated from one another and from metal support 97 by plastic insulating discs 99 and 101 and the slip rings are also insulated from contact with axial shaft 103. Thus, the slip rings carry the potential difference of the thermocouple and external brushes or contacts 105 and 107 transmit that potential difference to transmitting wires 109 and 111, which are connected to the microwave controller, not shown in this view. Various parts of the slip rings/brushes assembly and the axial holder that have not been described above are of insulating material or are insulated so as not to short out or ground the thermoelectric potential difference. However, it has been found to be desirable to ground the exterior or shield portion of thermocouple 29 to the chamber top 19 and this is effected by contact of hollow shaft 65 with flanged bearing 102 which is fastened to metal chamber top wall 19 by screws 104.

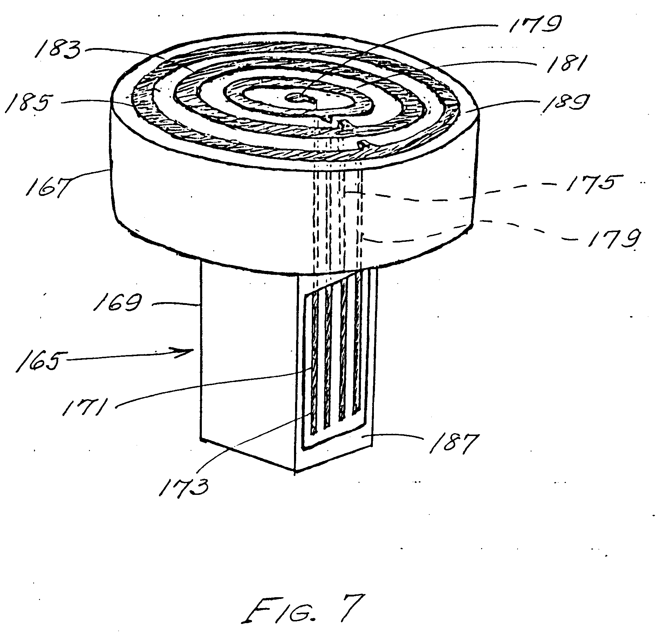

In FIG. 6 the container, thermocouple, polar liquid, turntable, drive, chamber bottom and collection container are essentially the same as those illustrated in FIG. 5 so they are similarly numbered. However, there is no vertical axial holder in FIG. 6, the slip ring assembly is different and connections are shown to a controller for the magnetron, so such improvements will now be described.

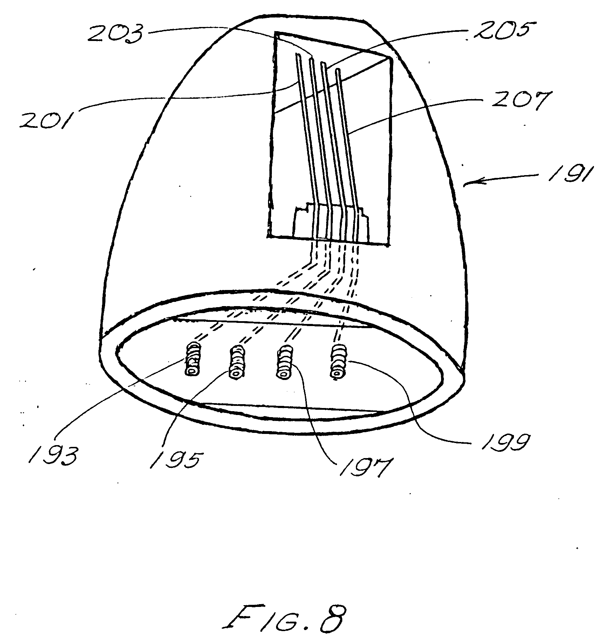

Thermocouple sheath 66 is welded, fused, soldered or otherwise electrically conductively joined to hollow conductive cylindrical part 117 at 119 and thereby is grounded to chamber top wall 19 via flange bearing 121, in which part 117 may turn. Slip contact or slip ring connector assembly 123 is of a no-twist telephone connector type, such as that which is described in U.S. patents 4,699,591 and 4,699,592 and which is marketed under the trade name TWISSTOP, and details of it will be given in the subsequent descriptions of FIG's. 7 and 8. In FIG. 6 it is seen that conductive wires 69 and 71 from the thermocouple wires and 125 and 127 from the cold junction compensating diode 129 pass through compartment 131, which also contains means for mounting the connector 123 (which will be clearer from FIG. 7). The wires are connected to the four circular or spot conductors and through them individually to each of four spring contacts (only one such conductor 133 and one of such spring contacts 141 are shown in FIG. 6, for clarity) and through four conductors (only one, 149, is shown) to connectors 157, 159, 161 and 163, which are connected to stationary controller 33. The circular conductors (or slip rings) and the contact springs (or brushes) are gold plated for best conductivity and for resistance to corrosion, to prevent any interference with conductivity. In FIG. 6 the leads from the thermocouple and the diode are shown connected directly to the slip rings but in practice, as will be indicated in FIG's. 7 and 8, connections to the slip rings will preferably be through snap action connectors 209 (of the telephone connector type), and similar connections will be made to the wires connected to the controller from the spring contacting conductors, like that identified by 149, as is illustrated.

In FIG. 7 molded polymeric plastic housing 165 includes upper and lower portions 167 and 169, which include conductors that transmit the thermocouple signal and the diode output upwardly from contact strips 171, 173, 175 and 177 to upper contact spot and rings 179, 181, 183 and 185, respectively, on upper face 189. Lower portion 167 of collector 165 snap fits into connector means, not shown, which matches conductors from the thermocouple and diode with contact strips 171, 173, 175 and 177 on side face 187. The mentioned connector means is mounted within housing 131 or is supported in movable condition at another convenient location.

In FIG. 8 molded plastic part 191 is shown, which is joinable, as by snap fitting, molding or shrinking, to mating part 165, and is located above it, so that spring contacts 193, 195, 197 and 199 make contact with rings 185, 183 and 181 and spot 179, respectively, while still being able to have part 165 rotate with respect to part 191. The gold plated springs 193, 195, 197 and 199 transmit the potentials (and currents) to contacts 201, 203, 205 and 207, respectively, and from such contacts snap fit connector 209 (see FIG. 6) transmits them to controller 33.

In FIG's. 6-8 the springs portion of the slip ring assembly is stationary and the rings portion is movable but these functions may be reversed. Also, it is not necessary for the parts to be in vertical orientation.

In the preferred embodiment of the invented microwave heating system described above any suitable laboratory type microwave heating system may be employed which includes a microwave chamber, a source of microwave radiation, means for controlling such radiation and means for moving a container of material to be heated in the microwave chamber. For the best operation of the system it is highly preferred to employ that which is manufactured by CEM Corporation, Matthews, North Carolina, and which is identified by them as their MDS-81D or MDS-205 system. Such a system and parts thereof are mentioned and/or described in U.S. patents 4,565,669 and 4,566,804, and in publications mentioned in those patents, including CEM bulletins, such as that which is entitled Microwave Drying/Digestion System MDS-81 Laboratory Microwave System, which was published by CEM Corporation in 1981, which is hereby incorporated herein by reference. An improved version of such system is the MDS-81D, described in CEM's MDS-81D Microwave Digestion System bulletin. Such systems are also described in U.S. patent applications S.N's. 07/352,003, 07/404,694 and 07/518,954, in which applications the microwave radiation applied is controlled by an external integrated circuit or microchip controller which is responsive to pressure generated in a container of material being heated on a turntable.

The thermocouple is preferably a Type K thermocouple of chromel-alumel composition, with the hot and cold junctions thereof both being spot welded and with the transmitting wires from the thermocouple being of copper. However, other suitable combinations of metals, alloys or other materials may be employed as the dissimilar conductors of the thermocouple, including copper/constantan, and in some instances it may be desirable to employ a plurality of thermocouples in series (a thermopile) to generate a greater potential from a single container or to generate an increased potential from a plurality of containers, in each of which a thermocouple hot junction or a plurality of such junctions may be present.

The bearing for the axial holder for the thermocouple, when such is employed, is preferably of the flanged ball bearing type but other conventional bearings can also be used, such as the shaft-journal-bearing type. The bearing will preferably include a metal housing and will be the means for grounding the thermocouple sheath to the chamber wall to prevent damage to the controller, which could otherwise occur.

The material of the coiled or spiralled shield for the thermocouple will normally be steel but other suitable conductive and microwave-reflective materials may also be employed, including silver, gold, platinum, copper, aluminum and various alloys thereof, including brass and platinum-iridium alloys, for example. Preferably, the reflecting and conducting noble metals, e.g., gold, or their alloys will be employed, or will be utilized as surface coatings or platings on the coiled tubular shields so as to prevent chemical attacks on the shields by any corrosive materials, such as hot acids or other reagents used in digestions, and to protect the thermocouple.

The controller, which is activated by the potential difference created in the thermocouple, and controls the microwave source accordingly, is preferably a Digitec Temperature Controller. However, other suitable controllers may be employed, too.

The fluoroptic temperature measurement device employed is preferably a Luxtron Fiber Optic Probe and such probes are preferably communicated to a Luxtron Fiber Optic Temperature Measuring Instrument, such as their Model 750, which displays the temperatures read. However, other fluoroptic devices, readers and displays may also be employed. In the embodiments of the invention illustrated the fluoroptic probes were not stress relieved in the manner of the thermocouple probes but in some preferred embodiments of the invention both probes may be enclosed in similar coiled shields or in the same shield, which shields can extend from the material being heated to the controllers or display devices. Also, such display devices, as well as other temperature indicators, may be employed as controllers to control the heating of materials by microwave, in supplementation of or in replacement of the described thermocouple control and/or pressure control of such heating.

The slip-contact or slip ring connector of FIG's. 6-8 is preferably a TWISSTOP connector, such as was previously described with respect to patents relating to it. Desirably, all contacts therein are of gold plated copper or other gold plated metal or alloy and the housing and snap fastener parts are of nylon, polypropylene or polyethylene.

The materials of construction of the various other parts of the invented system will now be mentioned. The microwave chamber walls are preferably of metal, such as stainless steel, and are preferably lined with a corrosion resistant polymeric coating, such as one of polytetrafluoroethylene or similar fluorinated synthetic organic polymer. The vertical axial holder for the thermocouple cold junction end is preferably of polypropylene and the pin to which the shielding tubing is fastened may be any suitable metal but preferably its exterior is corrosion resistant. Thus, it can be stainless steel or gold or platinum plated or coated base metal. The bearing and the journal for it, being located externally of the microwave chamber, may be of any conventional material of construction for such products, including aluminum, iron, steel, galvanized steel, chrome plated steel and stainless steel. The plastic separators between the slip rings (of FIG's. 1, 2 and 5) are preferably of nylon, polypropylene or polyethylene but other synthetic organic polymers are also useful. The slip rings of such embodiment are normally gold plated brass but are not limited to such, providing that the material is electrically conductive, and similarly, the brushes may be spring loaded gold plated brass pins or may be of other satisfactory condutive metals or alloys. The brushes may be mounted in non-conductive plastic mounts or in metallic mounts which are insulated where they contact the brushes. The conductors are normally of copper, (but aluminum and silver are also useful) insulated in rubber, chloroprene, PVC or other suitable plastic covering that is electrically non-conductive. The shield or band about the bottom of the container is preferably of aluminum, and often, for a 100 ml. container is about 2 cm. wide, but other microwave reflective materials can be substituted and the band width can be changed so as best to prevent overheating of the contained material (and it can sometimes also help to prevent some microwave interference with the thermocouple, too). The described shielding band is useful in more accurately controlling the temperature of microwave heated materials by means of a thermocouple, whether or not the material is in motion during microwave heating.

The vessels or containers employed, especially if for uses in digestions, should be microwave transmissive and chemically resistant to their contents. Preferably the vessel body (with-cap) will be of a polyether imide, such as Ultem® (General Electric Co.), and it will be lined with Teflon® PFA (E.I. du Pont Co.)

In the invention the described slip rings are employed to avoid any straining of the thermocouple or of the signal transmitting leads from it to the controller. Although the use of slip rings is desirable for such purpose in some instances they may be omitted, and straining of the thermocouple can still be prevented. For example, referring to FIG. 5, when upper bracing member 113 is removed conductors 107 and 109 may be joined to thermocouple leads 85 and 87 at contact posts 89 and 93, with the transmitting wires 109 and 111 being directed upwardly and thence to the controller. In such embodiment of the invention any strains due to movement of container 73 would not affect the thermocouple but would affect the transmitting conductors, which would be capable of withstanding periodic twistings due to oscillating rotation of the turntable and container. Of course, if the rotational motion was continuous, instead of oscillating, the transmitting wires could be twisted and broken, and in such case the slip ring assembly or equivalent would be required. However, preferably the turntable will move in oscillating rotational motion, with the arc of rotation normally being less than 720°, e.g., in the range of 90 to 720°, e.g., 360°, and at a rate of 0.1 to 10 oscillations/minute and with the number of containers being heated being in the range of 1 to 50, preferably 1 to 20, e.g., about 12.

In another embodiment of the invention, alluded to previously, the shielded thermocouple tubing assembly 29 may be replaced or supplemented by a tubing or hose, such as one of resistant plastic, that conducts the internal pressure of a container of heated material to a pressure controller, in which case it will be desirable to have another coiled (or corrugated)tubing communicating with the controller and with the tubing that will be replacing shield 29, by means of an axial tubing leg extending upwardly from the axial holder (for that design). Of course, in such situations it will be unnecessary to include the slip rings, brushes and grounding, and it will be desirable to employ corrosion resistant plastic tubing, such as polyfluoroethylene, e.g., Teflon®. When both the thermocouple and pressure transmitter are used together the control of the heating will normally be the function of only one such means, with the other acting as a monitor. In cases where the oscillating rotational motion of the turntable is less than 720°, preferably being less than 405° and more preferably being 360° or less, it might be unnecessary to provide a strain relieving connection in the pressure line but if the movement of the turntable is purely rotational or if the oscillating cycle is over 720° it will often be desirable to include a movable seal or connecting element between the coiled portions of tubing, which are most desirably supported by the axial holder (with one being located inside the microwave chamber).

The following working examples are given to illustrate the invention but not to limit it. Unless otherwise indicated, all parts in the examples, the specification and the claims are by weight and all temperatures are in °C.

### EXAMPLE 1

Twelve 100 ml. vessels of polyether imide, lined with Teflon PFA, are partially filled with 20 ml. each of concentrated nitric acid, a medium often employed for digesting analytical samples, such as nuclear wastes and waste water, which often may include metal oxides, metals and organic materials. The containers are like those illustrated in FIG's. 1, 2 and 5, and they are set up in a microwave heating system like that illustrated in such figures, with the acid resistant polytetrafluoroethylene liners inside the polyether imide strengthening exteriors. The basic system is a CEM Corporation MDS-81D (or MDS-205) unit, the controller is a Digitec Temperature Controller, the thermocouple is a chromel-alumel Type K thermocouple and the fluoroptic temperature measurement device employed is a Luxtron Fiber Optic Probe, utilized in conjunction with a Luxtron Fiber optic Temperature Measuring Instrument (System Model 750). One of the twelve containers, that which contains the thermocouple probe, has a 2 cm. wide aluminum or other metal or shielding strip about the base thereof (which is useful for waste water digestions), and that container also includes a fluoroptic probe. Three other such containers include fluoroptic probes but no thermocouple, and the other eight containers include neither thermocouple nor fluoroptic probes. The microwave heating system employed is a 900 or 1,000 watt system (at full power) and in these experiments it is set to control the temperature of the nitric acid (and of any digestions carried out) at 160°C. The object is to perform twelve similar digestions at such temperature, while using only one thermocouple probe in a single container for controlling the temperature in all the containers. The fluoroptic probes are used as checks on the thermocouple control to determine whether it is operating satisfactorily.

Starting at a temperature indicated by the thermocouple to be 23°C., microwave power is applied while the turntable is making about six 360° oscillations per minute (the number of oscillations per minute will usually be within the range of 0.2 to 6). The indicated thermocouple temperature increases to 67°C. after two minutes, to 96°C. in four minutes, to 110°C. after five minutes, to 140°C. after eight minutes, to 152°C. after ten minutes, to 159°C. after eleven minutes, and at twelve minutes it is at 160°C., at which the controller is in operation, turning the magnetron off and on, as required, to maintain such temperature. The checking fluoroptic sensor,which is in the same container, on average reads one or two °C. lower and the fluoroptic sensors in the other three containers, on average, read 4 to 5°C. higher. Because such variations are within experimental tolerances it is considered that the microwave heating system is functioning satisfactorily. However, if closer tolerances are required the set controlling temperature for the thermoelectrically activated controller may be adjusted accordingly. The temperatures recorded by the three fluoroptic probe/sensor combinations show little variation between them, with almost all such variations being limited to ±1°C. Thus, if such very accurate temperature control during the digestion process is required one may utilize the digested contents of the eleven non-thermocouple containers only (but that is rarely necessary, providing that the corrected temperatures are within the range specified).

## EXAMPLE 2

The same procedure is followed as in Example 1 except that each of the twelve containers is charged with a mixture of 5 ml. of the concentrated nitric acid and 50 ml. of water. Starting at an indicated temperature of 20°C., in the "thermocouple container", the temperature is 54°C. after five minutes, 84°C. after ten minutes, 108°C. after 15 minutes, 125°C. after 20 minutes, 139°C. after 25 minutes, 150°C. after 30 minutes, 158°C. after 35 minutes and after 40 minutes the controller is in operation, holding the temperature at 160°C. The fluoroptic probe in the same container as the thermocouple reads an average of 2 to 3°C. above the thermocouple temperature and the fluoroptic probes in the other three vessels average about 7°C. higher than the thermocouple probe indication. Such differences in temperatures between the vessel containing the thermocouple and the other vessels are compensatable to some extent by decreasing the height of the aluminum shield, as by 0.5 cm., which can bring the variation within ±5°C., which is normally acceptable. Similarly, excess heating of the "thermocouple vessel" (despite the presence of the shield) may also be compensated for by suitable adjustment of the Digitec Controller.

## EXAMPLE 3

In experiments which are modifications of those of Examples 1 and 2, the turntable is moved in rotational motion only (20 r.p.m.), the desired digestion temperature is varied ±20°C., the digestion temperature is controlled by,a pressure controller, connected through a coiled or spiralled tube to the container being heated, with such communication being by means of holding means, as previously described, metal oxide mixtures of nuclear wastes are digested, different wattage magnetrons are employed and/or fluoroptic means are utilized to control the microwave heating process. In all such operations and in others within the previous description in the specification satisfactory digestions and heatings are obtainable.

## EXAMPLE 4

When the experiments of Examples 1-3 are repeated, using the apparatuses of FIG's. 6-8 essentially the same results are obtainable, with the temperature variations between the containers being similar. Also, when employed in actual digestions of waste waters, sludges and nuclear wastes (using robotic means) consistent results are obtainable.

Various advantages of the described invention have previously been referred to in this specification but will now be summarized briefly. Improved evenness of heatings of contained fluids, which are usually polar liquids, are obtained by employing a turntable which moves the containers of materials to be heated in the microwave field, thereby helping to avoid overheating of some containers and underheating of others depending on their locations in the field. However, such motions of the containers create problems in communicating thermocouples and other signal generating devices to controllers and in ensuring that the signals are not distorted, due to twistings and strainings of the thermocouples and sometimes of their connectors, too. The present invention provides strain relieving means, including coiled sheaths or shields in which thermocouple parts and leads may be positioned, and also provides a slip ring or equivalent mechanism for strain-free communication of the thermoelectric potential of moving thermocouple parts with a stationary controller. Thus, the strains and incorrect temperature signals and readings that may be caused by such strains are prevented. The sheath for the thermocouple, which gives it its desirable coiled-shape, also acts as a reflector of microwave radiation, thereby improving the accuracy of the thermocouple readings. Similarly, the shielding band, near the bottom of the vessel that contains the thermocouple, helps to decrease the heating of the contents of the "thermocouple container" to compensate for any overheating that may be due to the presence of the thermocouple and its sheath. The strain relieving effect of the coiled sheath is also obtainable in pressure controlled microwave heating operations, and coiled aid "corrugated" sheaths or connectors can act as means for transmitting the vessel pressure to a pressure controller, without undue strain. In a similar manner the invention may be employed to relieve strains of a fluoroptic probe of a fluoroptic controller. Although a primary purpose of the present invention is to relieve strains caused by connections between moving and stationary parts in a control system some aspects of the invention, previously mentioned, are also applicable to control systems when the containers are not in motion with respect to the controllers. Among such aspects are the shielding functions of the sheath for the thermocouple and the shielding band for the container of the material to be heated. Although the invention is primarily directed to heating digestion fluids it is also applicable to heating other polar materials, including acids and salt solutions, to temperatures which may be as high as 250°C., e.g., 120 - 200°C In some instances the invention may be used to controllably heat ferromagnetic materials which, in turn, are means for heating other materials.

The invention has been described with respect to several illustrative examples and embodiments thereof but is not to be limited to these because it is evident that one of skill in the art with the present specification before him or her will be able to utilize substitutes and equivalents without departing from the invention.

## Claims

1. A microwave heating system for controllably heating a material in a container that is in motion in a microwave chamber which comprises a walled microwave chamber, a source of microwave radiation, which radiation is directed into the chamber, a controller for the source of microwave radiation, means for moving a microwave transmissive container containing a microwave absorptive material to be heated, thermocouple means for insertion into the container to produce a thermoelectric potential which is indicative of the temperature of the contained material being heated by the microwave radiation, means for transmitting the thermoelectric potential produced by the thermocouple to the controller, which controls the operation of the source of microwave radiation in response to such thermoelectric potential and thereby controls the heating of the material in the moving container, and means for preventing straining of the thermocouple that could otherwise be caused by movement thereof as the container moves relative to at least part of such transmitting means.

2. A microwave heating system according to claim 1 wherein the walled chamber includes top, bottom and side walls, the container is sealed, the means for moving the sealed container of arterial to be heated is a turntable, the motion of which is rotary or oscillating rotational, and the thermocouple is communicated to the controller through the transmitting means, which are electrical conductors, by means of the strain preventing means, so that the thermocouple is not subjected to strain, due to motion of the thermocouple with the container, sufficient to break it or significantly to affect the thermoelectric potential produced by the thermocouple.

3. A heating system according to claim 2 wherein the turntable rotates or moves in horizontal oscillating rotational motion and is capable of supporting a plurality of containers of material to be heated, and the thermocouple is comprised of two dissimilar metallic electrically conductive wires joined together in a junction at a hot end which is insertable in a container of material to be controllably heated, and joined together in a different junction at a cold end, which junctions are communicated by electrical conductors to the temperature controller by means of slip ring or ring-brush contacts which help to prevent straining of the thermocouple which could otherwise be caused by movement thereof with respect to the conductive wires as the container moves.

4. A microwave heating system according to claim 3 wherein the thermocouple includes a compensating diode or resistor in the circuitry thereof.

5. A microwave heating system according to claim 4 which comprises holding means for holding the cold end of the thermocouple, so that it moves correspondingly with the hot end thereof, and wherein the slip ring contacts are anti-twist contacts between contact rings and spring loaded contacts which are pressed against such rings.

6. A microwave heating system according to claim 5 wherein a bearing for the holding means and cold junction end portion of the thermocouple means is mounted on the top wall of the chamber, with the slip ring assembly and a compensating diode being located above the bearing, and the slip ring assembly comprises a plurality of separate concentric rings from which electric contacts are made in non-twisting relationship with spring loaded contacts that transmit electrical potentials to the controller

7. A microwave heating system according to claim 6 wherein the thermocouple is located in a metal shielding tube, from which it is insulated, with the hot junction of the thermocouple at one end of the tube, which tube includes a coiled or spiral section to decrease any strains in the tube and thermocouple due to any relative movement of the thermocouple portion in the container with respect to any portion thereof at the other end of such coiled or spiral section.

8. A microwave heating system according to claim 7 wherein the microwave chamber walls are metallic and coated with a protective fluoropolymer, and the shielding tube for the thermocouple is electrically grounded to such a wall.

9. A microwave heating system according to claim 8 wherein the shielding tube for the thermocouple is gold plated on the exterior thereof, which decreases thermocouple error due to microwave effects on the thermocouple, and minimizes any possible corrosion of the tube by materials being heated.

10. A microwave heating system according to claim 9 wherein the hot junction end of the thermocouple, with shielding metallic tube, is substantially straight, for easy insertion into and sealing in a container for material to be heated by microwave radiation, and a substantial proportion of the rest of the thermocouple and shielding is of coiled or spiral shape.

11. A microwave heating system according to claim 10 wherein a shield of metal is provided for the base of the container in which the thermocouple is to be inserted, so as to shield some of the material in the container from the microwave radiation.

12. A microwave heating system according to claim 11 which comprises check means for measuring the temperature in the same or another container in the microwave chamber, which check means comprises a fluoroptic temperature probe and a sensor, including a display for the temperature sensed.

13. A microwave system according to claim 1 wherein the microwave chamber is of microwave reflective and electrically conductive wall material, the source of microwave radiation is a magnetron, the controller is located outside the microwave chamber, the means for moving the containers is a turntable adapted to hold a plurality of containers, at least one container of material to be heated is positioned of the turntable and the thermocouple hot junction is held in the container and in the material to be heated.

14. A microwave system according to claim 13 wherein the hot and cold junctions of the thermocouple are communicated to the controller by means of slip ring or equivalent contacts which effect such communication without straining the thermocouple despite the fact that it is in motion due to the motion of the container of material in which the thermocouple is positioned, and the controller is stationary.

15. A microwave system according to claim 14 wherein the slip ring contacts are anti-twist contacts between contact ring and spring loaded contacts which are pressed against such rings.

16. A microwave system according to claim 15 wherein the chamber includes a top wall, holding means for the hot end of the thermocouple and a bearing for the holding means are mounted on the top wall and the anti-twist slip ring assembly includes a plurality of separate concentric rings in electrical contacts with spring loaded contacts, with one such spring loaded contact being in contact with each said separate ring.

17. A microwave system according to claim 13 wherein the thermocouple is located within a metallic shielding tube, from which it is insulated, with the hot junction being at one end of the thermocouple, which is substantially straight for such a portion thereof that fits inside the container and is coiled or spirally shaped for a substantial part of the rest of its length, to relieve any strains in the tube and thermocouple due to any relative movement of the thermocouple hot junction with respect to the cold junction thereof.

18. A microwave system according to claim 13 wherein the microwave chamber includes a top wall of electrically conductive material, coated with a protective coating or liner, and the thermocouple is shielded by an electrically conductive metallic tube which is electrically grounded to the electrically conductive top wall of the microwave chamber.

19. A microwave system according to claim 13 wherein a base portion of the container of material to be microwave heated is shielded from microwave radiation by a shield of metal about such container section, which decreases heating of the material to compensate for any overheating due to the presence in the material of the thermocouple.

20. A process for controllably microwave heating a microwave absorptive material in a microwave transmissive container while such container is in motion which comprises controllably directing microwave radiation into a microwave chamber which contains a turntable on which the container is moving in rotational or oscillatingly rotational motion, so as controllably to heat the material in the container to a desired temperature, while having the hot junction of a thermocouple in the material in the container to generate a potential difference between it and a cold junction of the thermostat, and transmitting the potential difference to a controller of the source of microwave radiation to affect such source to increase the microwave radiation if the potential difference is lower than that which is indicative of a desired temperature in the material, and to decrease it if the potential difference is higher than that indicative of the desired temperature, while maintaining the thermocouple in essentially the same angular motion over its length from the hot junction to the cold junction so as to prevent straining of the thermocouple that could otherwise be caused by relative movement of parts thereof and could strain or break the thermocouple and cause the potential difference to the controller not to be indicative of the temperature of the material.

21. A process according to claim 20 in which material being heated is in a sealed container, and the potential difference between the hot and cold junctions of the thermocouple is conducted by a slip ring assembly to wires transmitting such potential difference to the controller for the source of microwave radiation.

22. A process according to claim 21 wherein the material being controllably heated is a polar material.

23. A process according to claim 22 wherein the material being heated is an acid or an aqueous solution of an acid being employed in a digestion process.

24. A process according to claim 22 wherein the thermocouple is shielded by a gold plated metal shield over its length and the container is shielded by a metal shield at a lower portion thereof.

25. A process according to claim 20 which is carried out in a microwave heating system which comprises a walled microwave chamber, a source of microwave radiation, which radiation is directed into the chamber, a controller for the source of microwave radiation, means for moving a microwave transmissive container of microwave absorptive material to be heated, thermocouple means for insertion into the container to produce a thermoelectric potential which is indicative of the temperature of the contained material being heated by the microwave radiation, means for transmitting the thermoelectric potential produced by the thermocouple to the controller, which controls the operation of the source of microwave radiation in response to such thermoelectric potential and thereby controls the heating of the material in the moving container, and means for preventing straining of the thermocouple that would otherwise be caused by movement thereof as the container moves relative to such transmitting means.

26. A process according to claim 25 wherein the thermocouple is of chromel-alumel, shielded in a gold plated metallic shield, the container is of polyfluoroethylene and/or polyether imide, the material being heated is a polar liquid, the container and the contained material are partially shielded from microwave radiation by a metallic sleeve around a lower portion of the container, and the controller controls the microwave radiation by turning the microwave radiation on and off, or by increasing or decreasing its power or frequency, to raise or lower the temperature of the material being heated.

27. A microwave heating system for controllably heating material in a sealed container moving in a microwave chamber which comprises a microwave chamber, a source of microwave radiation, which radiation is directed into the chamber, a controller for the source of microwave radiation which is responsive to a signal transmitted to it, means for moving a microwave transmissive container of microwave absorptive material to be heated, signal generating or signal modifying means for insertion into the container of microwave absorptive material to produce a signal which is indicative of the temperature and/or pressure in the container, and means for transmitting such signal to the controller, which controls the operation of the source of microwave radiation in response to the signal and thereby controls the heating of the material in the moving container, which transmitting means is of such structure as to prevent or relieve any strains that could have been caused by the relative movement between the container of material being heated and the controller.

28. A microwave heating system for controllably heating a material in a container in a microwave chamber which comprises a walled microwave chamber, a source of microwave radiation, which radiation is directed into the chamber, a controller for the source of microwave radiation, a sealed container of microwave transmissive material for holding the material to be heated, thermocouple means for insertion into the container to produce a thermoelectric potential indicative of the temperature of the material being heated by the microwave radiation, microwave-reflective means about a part of the container to decrease the microwave radiation onto the contents of the container to compensate for overheating of the material due to the presence of the thermocouple in the container, and means for transmitting the thermoelectric potential produced by the thermocouple to the controller, which controls the operation of the source of microwave radiation and thereby controls the heating of the material in the container.

29. A microwave heating system according to claim 28 wherein the microwave-reflective means is an aluminum band about the side of the container near the bottom thereof, which shields that part of the container from the microwave radiation, and is of such size as to prevent any overheating of the material in the container that contains the thermocouple, compared to heatings of materials in other containers in the microwave chamber which do not contain a thermocouple.

30. A microwave heater in which a thermoelectric potential produced by a thermocouple in an article to be heated is employed to control the application of microwave energy to the article, the thermocouple being connected such as to allow rotation of the article during heating.

FIG.1

FIG. 2

FIG. 3

FIG. 4

FIG. 5

FIG. 6

F/G. 7

FIG. 8